(19) Europäisches Patentamt
European Patent Office
Office européen des brevets

(11) **EP 1 807 832 B1**

(12) **EUROPEAN PATENT SPECIFICATION**

(45) Date of publication and mention
of the grant of the patent:
**23.12.2009 Bulletin 2009/52**

(51) Int Cl.:
**G11B 7/135** (2006.01) **G11B 7/12** (2006.01)
**G11C 13/04** (2006.01)

(21) Application number: **05794813.5**

(22) Date of filing: **24.10.2005**

(86) International application number:
**PCT/IB2005/053464**

(87) International publication number:
**WO 2006/046184 (04.05.2006 Gazette 2006/18)**

(54) **OPTICAL DEVICE FOR SCANNING AN INFORMATION CARRIER**

OPTISCHE VORRICHTUNG ZUM ABTASTEN EINES INFORMATIONSTRÄGERS

DISPOSITIF OPTIQUE POUR LE BALAYAGE D'UN SUPPORT D'INFORMATIONS CARRIER

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.10.2004 EP 04300727**

(43) Date of publication of application:
**18.07.2007 Bulletin 2007/29**

(73) Proprietor: **Koninklijke Philips Electronics N.V.**
**5621 BA Eindhoven (NL)**

(72) Inventors:
• **HENDRIKS, Robert**
**F-75008 PARIS (FR)**
• **STALLINGA, Sjoerd**
**F-75008 PARIS (FR)**

• **HENDRIKS, Bernardus**
**F-PARIS 75008 (FR)**

(74) Representative: **Uittenbogaard, Frank**
**Philips**
**Intellectual Property & Standards**
**P.O. Box 220**
**5600 AE Eindhoven (NL)**

(56) References cited:
**US-A- 3 676 864      US-A1- 2003 086 141**
**US-B1- 6 341 136**

• **LOHMANN A W ET AL: "Making an array illuminator based on the Talbot effect" APPLIED OPTICS, OSA, OPTICAL SOCIETY OF AMERICA, WASHINGTON, DC, US, vol. 29, no. 29, 10 October 1990 (1990-10-10), pages 4337-4340, XP002314360 ISSN: 0003-6935**

**Description**

**FIELD OF THE INVENTION**

The present invention relates to an optical scanning device for scanning an information carrier, the device comprising:

an array optical element arranged to generate from an incident radiation beam by exploiting the Talbot effect a two-dimensional array of radiation spots for the scanning of the information carrier; and

an aberration optical element arranged to apply a predetermined optical aberration to the radiation for correction of optical aberration in the radiation spots.

The invention also relates to an optical element for use in such a device, a scanning method, and a method of manufacturing an optical scanning device. The invention may be used in the field of optical data storage.

**BACKGROUND OF THE INVENTION**

Optical storage is widely used for content distribution, for example in storage systems based on the CD (Compact Disc) and DVD (Digital Versatile Disc) standards. Optical storage has a big advantage over hard-disc and solid-state storage in that the information carriers are easy and cheap to replicate.

However, due to the large amount of moving parts in the drives, known applications using this type of storage are not robust to shocks when performing read operations, considering the required stability of said moving parts during such operations. As a consequence, optical storage cannot easily be used in applications that are subject to shocks, such as in portable devices.

Recently, a novel alternative optical storage system has been proposed, using an array of optical radiation spots to scan an information carrier. The information carrier can be used for content distribution. The specification of the proposed systems can provide an information density and storage capacity of the order of 1 Gbyte on a stamp sized (<1 inch$^2$) disc.

US 2003/0086141 A1 (cf. the preamble of the independent claims) discloses an apparatus for scanning a rotating optical disk, wherein light from a laser is focused by a lens on an intermediate plane, near or at an optionally transparent plate. The light is picked up by an optical relay system. The plate may be needed in order to remove optical aberrations from the light focused by the lens. The document also proposes generating an array of radiation spots by exploiting the Talbot effect.

US 3,676,864 describes an optical memory apparatus having a combining lens that optically communicates with a relay lens array. The combining lens may be a single lens, or it may be broken down into a multiple lens system to correct for spherical aberration and other types of aberration.

US 6,341,136 B1 describes an optical beam deflector. An incident optical beam is divided into first micro cross sections, and phases of the optical beam in the first micro cross sections are respectively modified to that a desired phase gradient is realized over the cross section of the optical beam. Thereafter the cross section of the optical beam is further divided into second micro cross sections, and phases of the optical beam in the second cross sections are respectively modified so that the optical beam as a whole is finally directed in a desired direction of deflection or to a desired point.

**OBJECT AND SUMMARY OF THE INVENTION**

It is an object of the invention to improve the resolving capability of the two-dimensional array of radiation spots. This object is achieved by correcting the fundamental optical aberration of the Talbot effect

According to a first aspect of the present invention there is provided an optical scanning device for scanning an information carrier, the device comprising: an array optical element arranged to generate from an incident radiation beam by exploiting the Talbot effect a two-dimensional array of radiation spots for the scanning of the information carrier; and an aberration optical element arranged to apply a predetermined optical aberration to the radiation for correction of optical aberration in the radiation spots, wherein the optical aberration to be corrected is the fundamental optical aberration of the Talbot effect.

The aberration optical element provides a predetermined optical aberration to the radiation, to offset the aberration that would otherwise occur at the radiation spots e.g. in the image of the array optical element. This allows an increase in data density of the information carrier.

The aberration optical element may be located on the optical path between the array optical element and the radiation spots.

The aberration optical element may be located on the optical path between a source of the incident radiation beam and the array optical element.

The aberration optical element may be arranged to substantially alter only the phase of the radiation.

Preferably, the aberration optical element comprises a transparent material having substantially uniform refractive index, the thickness of the material varying across the element to provide the predetermined optical aberration.

The aberration optical element may be formed as a discrete device.

The aberration optical element may comprise said array optical element.

The array optical element may be an array of lenses or an array of apertures.

The array optical element may be arranged to generate the spots at substantially the Talbot distance from the array optical element.

The aberration optical element may be arranged to apply the predetermined optical aberration for correction of optical aberration in the radiation spots due to the finite size of the array optical element.

The device may further comprise a detector comprising an array of optical sensors arranged to detect information from an array of output light beams generated by said information carrier.

According to a second aspect of the present invention there is provided an aberration optical element for use in an optical scanning device for scanning an information carrier, the device comprising an array optical element arranged to generate from an incident radiation beam by exploiting the Talbot effect a two-dimensional array of radiation spots for the scanning of the information carrier; wherein the aberration optical element is arranged to apply a predetermined optical aberration to the radiation for correction of optical aberration in the radiation spots, and wherein the optical aberration to be corrected is the fundamental optical aberration of the Talbot effect.

According to a third aspect of the present invention there is provided a method of scanning an information carrier, the method comprising: generating from an incident radiation beam by exploiting the Talbot effect a two-dimensional array of radiation spots for the scanning of the information carrier; and applying a predetermined optical aberration to the radiation for correction of optical aberration in the radiation spots, wherein the optical aberration to be corrected is the fundamental optical aberration of the Talbot effect.

According to a fourth aspect of the present invention there is provided a method of manufacturing an optical scanning device for scanning an information carrier, the method comprising: providing an array optical element arranged to generate from an incident radiation beam by exploiting the Talbot effect a two-dimensional array of radiation spots for the scanning of the information carrier; and providing an aberration optical element arranged to apply a predetermined optical aberration to the radiation for correction of optical aberration in the radiation spots, wherein the optical aberration to be corrected is the fundamental optical aberration of the Talbot effect.

**BRIEF DESCRIPTION OF THE DRAWINGS**

Embodiments of the present invention will now be described, by way of example only, with reference to the accompanying drawings, in which identical parts or sub-steps are designated in the same manner:

Fig.1 depicts a first system;
Fig.2 depicts a second system;
Fig.3 depicts a first arrangement for moving the systems over an information carrier;
Fig.4 depicts a second arrangement for moving the systems over an information carrier;
Fig.5 depicts detailed elements of the second arrangement for moving the systems over an information carrier;
Fig.6 depicts a detailed view of components dedicated to macro-cell scanning used in systems;
Fig.7 illustrate the principle of macro-cell scanning;
Fig.8 depicts a three-dimensional view of the first system;
Fig.9 depicts a third system;
Fig.10 depicts a three-dimensional view of the third system;
Fig.11 depicts an electrically controllable liquid crystal cell and a voltage control curve of such a liquid crystal cell;
Fig.12 depicts a first embodiment of a planar system;
Fig.13 depicts a second embodiment of a planar system;
Fig. 14 depicts a third embodiment of a planar system;
Fig.15 depicts a three-dimensional view of the third embodiment of a planar system;
Fig.16 depicts a detailed view of a component used in the planar systems;
Fig.17 depicts an intensity distribution from a periodic structure, illustrating the Talbot effect;
Fig.18 depicts a schematic diagram illustrating the use of an aperture array to generate an array of probes;
Fig.19 depicts a schematic diagram illustrating the use of a phase mask to generate an array of probes in accordance with an embodiment of the present invention;
Fig.20 depicts a schematic diagram illustrating the use of a phase mask in combination with an aperture array to generate an array of probes in accordance with an embodiment of the present invention;

Fig.21 depicts the probes, when no aberrations are present;

Fig.22 depicts the intensity pattern of the probes obtained at the Talbot distance, when aberrations are present;

Fig.23 depicts the image at the Talbot distance when the full aberration correction is used in accordance with an embodiment of the present invention;

Fig.24 depicts the amplitude (left) and phase (right) profile of the one unit cell mask used to generate the spots of Figure 23;

Fig. 25 depicts the image at the Talbot distance when the the amplitude of the mask is set to 1, keeping only the phase term, in accordance with an embodiment of the present invention ;

Fig.26 depicts the amplitude (left) and phase (right) profile of the mask (one unit cell) used to generate the spots of Figure 25;

Fig.27 depicts the image obtained at the Talbot distance when using a mask with 4 discrete phase steps $(-\frac{1}{2}\pi,0,\frac{1}{2}\pi,\pi)$ ;

Fig.28 depicts the mask used to generate the probes shown in Figure 27 (the mask amplitude is kept equal to 1);

Fig.29 depicts the image obtained at the Talbot distance when the mask is manually modified to make it easier to produce (some of the smallest features have been removed compared with the mask in Figure 28); and

Fig.30 depicts the mask used to generate the probes shown in Figure 29 (the amplitude is kept equal to 1).

## DETAILED DESCRIPTION OF EMBODIMENTS OF THE INVENTION

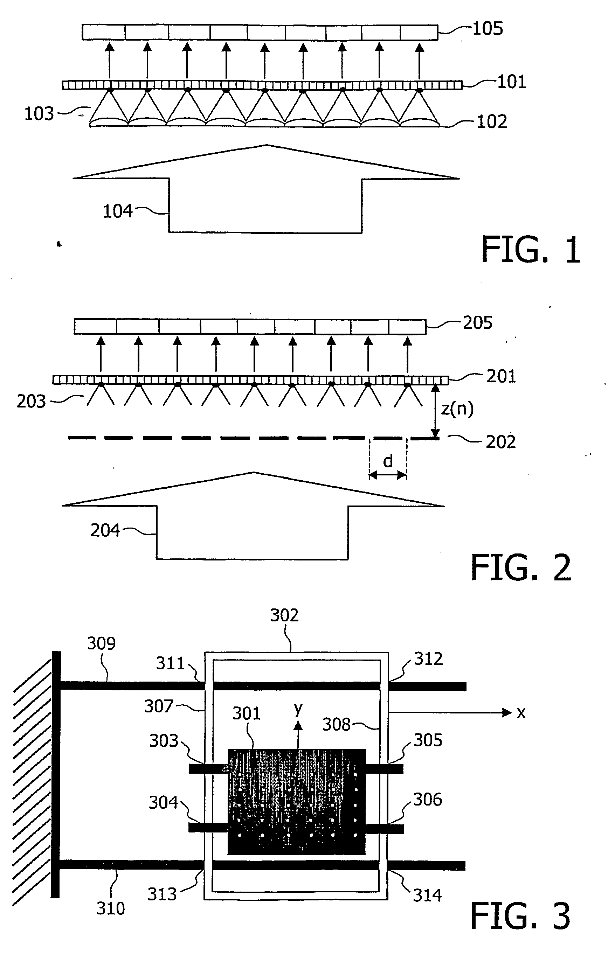

Firstly, a detailed description of the general novel system (i.e. optical scanning device and information carrier), and examples of the possible different embodiments, is provided with reference to Figures 1 to 16. A detailed explanation of the optical aberration occurring in such a system is then provided, along with examples of how an aberration optical element in accordance with embodiments of the present invention can be implemented in such a system, to improve the performance of the system.

The system is arranged to scan data stored on an information carrier. The term scanning is intended to encompass both reading information from the carrier, and writing information to the carrier. The optical scanning device may be arranged to perform either one or both functions.

The information carrier is intended to store data organized in an array, as in a data matrix. This data is preferably of the binary type, i.e. consisting of one's and zero's. If the information carrier is intended to be read in transmission, the states of binary data stored on the information carrier are represented by transparent areas and non-transparent areas (i.e. light-absorbing). Alternatively, if the information carrier is intended to be read in reflection, the states of binary data stored on the information carrier are represented by non-reflective areas (i.e. light-absorbing) and reflective areas. The areas are marked in a material such as glass, plastic or a material having magnetic properties.

The system comprises :

- an optical element for generating an array of light spots from an input light beam, said array of light spots being intended to scan said information carrier,
- a detector for detecting said data from an array of output light beams generated by said information carrier.

This system can include a static information carrier (also called optical card) intended to store binary data organized in a data matrix. The bits on the information carrier are for example represented by transparent and non-transparent area's.

The information carrier is intended to be illuminated not by a single light beam, but by an array of light spots generated by the array optical element. The optical element corresponds advantageously to an array of micro-lenses, or to an array of apertures, designed to exploit the Talbot effect.

Each light spot selects a specific area of data to be read on the information carrier, said data being detected by the detector. By moving the optical element over the information carrier, the light spots can scan the entire information carrier.

Since the information carrier is static, the number of moving elements is highly reduced so that the system provides a robust mechanical solution.

The system allows the use of an information carrier that combines the advantages of solid-state storage in that it is static, and the advantages of optical storage in that it is removable from the reader apparatus which comprises the system.

In a first embodiment depicted in Fig.1, the system (i.e. the optical scanning device) for reading data stored on an information carrier 101 comprises an optical element 102 for generating an array of light spots 103 from an input light beam 104, said array of light spots 103 being intended to scan the information carrier 101.

The optical element 102 corresponds to a two-dimensional array of micro-lenses at the input of which the coherent input light beam 104 is applied. The array of micro-lenses 102 is placed parallel and distant from the information carrier 101 so that light spots are focussed on the information carrier. The numerical aperture and quality of the micro-lenses determines the size of the light spots. For example, a two-dimensional array of micro-lenses 102 having a numerical aperture which equals 0.3 can be used. The input light beam 104 can be realized by a waveguide (not represented) for expanding an input laser beam, or by a two-dimensional array of coupled micro lasers.

The light spots are applied on transparent or non-transparent areas of the information carrier 101. If a light spot is applied on a non-transparent area, no output light beam is generated in response by the information carrier. If a light spot is applied on a transparent area, an output light beam is generated in response by the information carrier, said output light beam being detected by the detector 105. The detector 105 is thus used for detecting the value (e.g. binary value) of the data of the area on which the optical spot is applied.

The detector 105 is advantageously made of an array of sensor elements, for example a CMOS-sensor (Complementary Metal-Oxide Silicon sensor) or CCD (change-Coupled Device). For example, one sensor element of the detector is placed opposite an elementary area containing one datum (i.e. one bit) of the information carrier. In that case, one sensor element of the detector is intended to detect one datum of the information carrier.

Advantageously, an array of micro-lenses (not represented) is placed between the information carrier 101 and the detector 105 for focusing the output light beams generated by the information carrier on the detector, for improving the detection of the data.

In a second embodiment depicted in Fig.2, the system for reading data stored on an information carrier 201 comprises an optical element 202 for generating an array of light spots 203 from an input light beam 204, said array of light spots 203 being intended to scan the information carrier 201.

The optical element 202 corresponds to a two-dimensional array of apertures at the input of which the coherent input light beam 204 is applied. The apertures correspond for example to circular holes having a diameter of 1 $\mu$m or smaller. The input light beam 204 can be realized by a waveguide (not represented) for expanding an input laser beam, or by a two-dimensional array of coupled micro lasers.

The light spots are applied on transparent or non-transparent areas of the information carrier 201. If a light spot is applied on a non-transparent area, no output light beam is generated in response by the information carrier. If a light spot is applied on a transparent area, an output light beam is generated in response by the information carrier, said output light beam being detected by the detector 205. Similarly as the first embodiment depicted in Fig.1, the detector 205 is thus used for detecting the binary value of the datum of the area on which the optical spot is applied.

The detector 205 is advantageously made of an array of sensor elements, for example a CMOS-sensor or CCD. For example, one sensor element of the detector is placed opposite an elementary area containing a datum of the information carrier. In that case, one sensor element of the detector is intended to detect one datum of the information carrier.

Advantageously, an array of micro-lenses (not represented) is placed between the information carrier 201 and the detector 205 for focusing the output light beams generated by the information carrier on the detector, improving the detection of the data.

The array of light spots 203 is generated by the array of apertures 202 in exploiting the Talbot effect which is a diffraction phenomenon working as follows. When a coherent light beam is applied to an object having a periodic diffractive structure, such as the array of apertures 202, the beam just after passing the array of apertures consists of a periodic array of coherent secondary emitters. This diffracted light recombines into an exact image of the beam just after the periodic diffractive structure at a plane located at a predictable distance z0 from the diffracting structure. This distance z0 is known as the Talbot distance. The Talbot distance z0 is given by the relation $z0 = 2.d^2 / \lambda$, where d is the period of the diffractive structure and $\lambda$ is the wavelength of the input light beam. More generally, re-imaging takes place at other distances z(n) spaced further from the diffractive structure and which are a multiple of the Talbot distance z such that $z(n) = 2.n.d^2 / \lambda$, where n is an integer. Such a re-imaging also takes place for n = ½ + an integer, but here the image is shifted over half a period. The re-imaging also takes place for n = ¼ + an integer, and for n=3/4 + an integer, but the image has a doubled frequency which means that the periodicity of the apertures is halved with respect to that of the array of apertures.

Exploiting the Talbot effect allows generating an array of light spots of high quality at a relatively large distance from the array of apertures 202 (a few hundreds of $\mu$m, expressed by z(n)), without the need of optical lenses. This allows inserting for example a cover layer between the array of aperture 202 and the information carrier 201 for preventing the latter from contamination (e.g. dust, finger prints ...). Moreover, this facilitates the implementation and allows increasing in a cost-effective manner, compared to the use of an array of micro-lenses, the density of light spots which are applied to the information carrier.

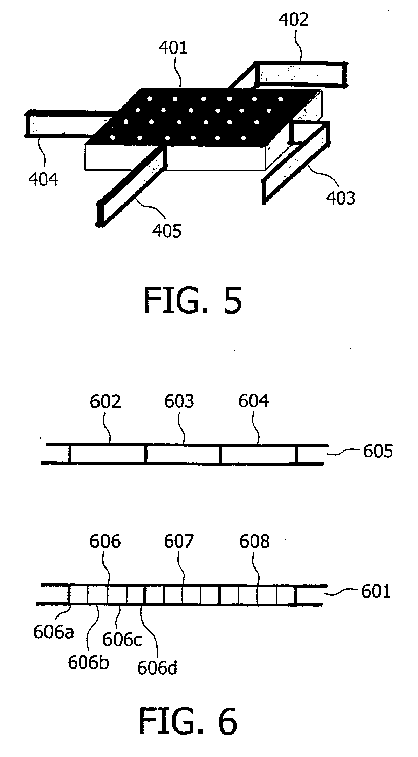

Fig.6 depicts a detailed view of the system. It depicts a detector 605 which is intended to detect data from output light beams generated by the information carrier 601. The detector comprises sensor elements referred to as 602-603-604, the number of elements shown being limited for facilitating the understanding. In particular, element 602 is intended to detect data stored on the data area 606 of the information carrier, element 603 is intended to detect data stored on the data area 607, and element 604 is intended to detect data stored on the data area 608. Each data area (also called macro-cell) comprises a set of elementary data. For example, data area 606 comprises binary data referred to as 606a-606b-606c-606d.

In this embodiment, one sensor element of the detector is intended to detect a set of data, each elementary datum among this set of data being successively read by a single light spot generated either by the array of micro-lenses 102 depicted in Fig.1, or by the array of apertures depicted in Fig.2. This technique of reading data on the information carrier is called macro-cell scanning in the following.

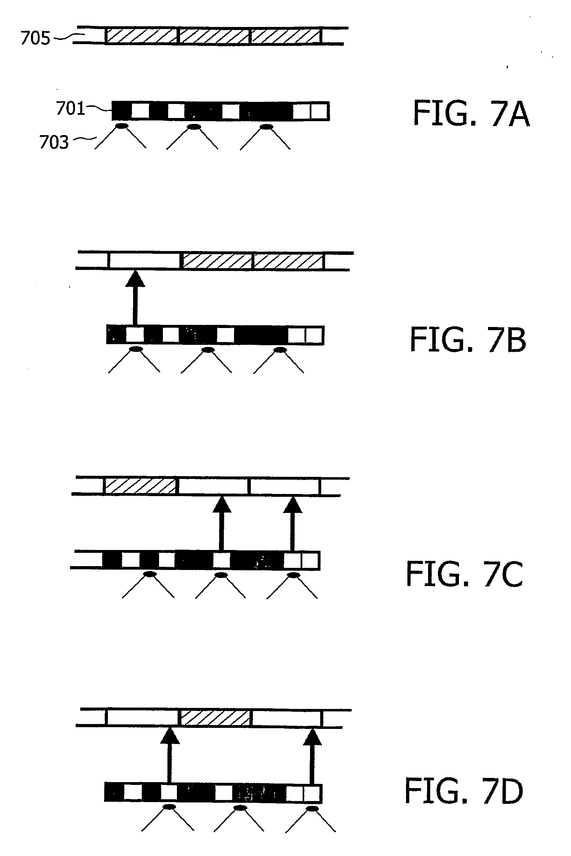

Fig.7, which is based on Fig.6, illustrates a non-limitative example of the macro-cell scanning of an information carrier 701.

Data stored on the information carrier 701 have two states indicated either by a black area (i.e. non-transparent) or white area (i.e. transparent). For example, a black area corresponds to a "0" binary state while a white area corresponds to a "1" binary state.

When a sensor element of the detector 705 is illuminated by an output light beam generated by the information carrier 701, the sensor element is represented by a white area. In that case, the sensor element delivers an electric output signal (not represented) having a first state. On the contrary, when a sensor element of the detector 705 does not receive any output light beam from the information carrier, the sensor element is represented by a cross-hatched area. In that case, the sensor element delivers an electric output signal (not represented) having a second state.

In this example, each set of data comprises four elementary data, and a single light spot is applied simultaneously to each set of data. The scanning of the information carrier 701 by the light spots 703 is performed for example from left to right, with an incremental lateral displacement which equals the distance between two elementary data.

In position A, all the light spots are applied to non-transparent areas so that all sensors of the detector area in the second state.

In position B, after displacement of the light spots to the right, the light spot to the left side is applied to a transparent area so that the corresponding sensor is in the first state, while the two other light spots are applied to non-transparent areas so that the two corresponding sensors of the detector are in the second state.

In position C, after displacement of the light spots to the right, the light spot to the left side is applied to a non-transparent area so that the corresponding sensor is in the second state, while the two other light spots are applied to transparent areas so that the two corresponding sensors of the detector are in the first state.

In position D, after displacement of the light spots to the right, the central light spot is applied to a non-transparent area so that the corresponding sensor is in the second state, while the two other light spots are applied to transparent areas so that the two corresponding sensors of the detector are in the first state.

The scanning of the information carrier 701 is complete when the light spots have been applied to all data of a set of data facing a sensor of the detector. Since the light spots applied to the information carrier form a two-dimensional array, a set of data opposite a sensor of the detector is read successively, e.g. lines of elementary data are read after lines of elementary data, and elementary data after elementary data for a given line of elementary data. It implies a two-dimensional scanning of the information carrier.

The illustration presented in Fig.7 is non-limitative also in the fact that instead of reading binary elementary data, the data could be coded at higher resolution, for instance in using multilevel schemes. An example would be a scheme
where two elementary bits are detected per pixel, by means of distinguishing four grey levels (0, 1/4, 1/2, 3/4). This would double the data density compared with a system using a binary coding.

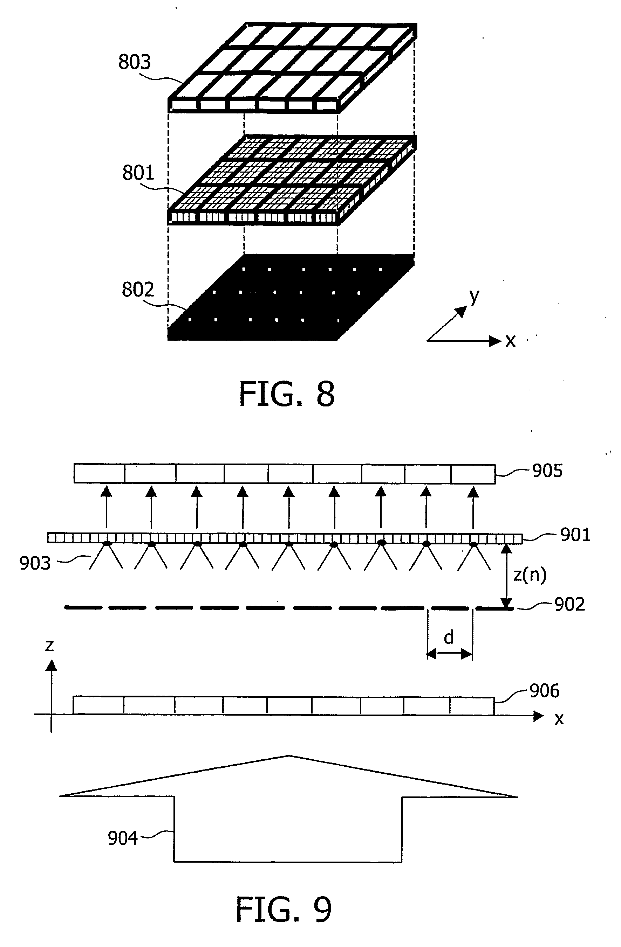

Fig.8 depicts a three-dimensional view of the system as depicted in Fig.2. It comprises an array of apertures 802 for generating an array of light spots applied to the information carrier 801. Each light spot is applied and scanned over a two-dimensional set of data of the information carrier 801 (represented by bold squares). In response to this light spot, the information carrier generates (or not, if the light spot is applied to a non-transparent area) an output light beam in response which is detected by the sensor of the detector 803 opposite the set of data which is scanned. The scanning of the information carrier 801 is performed in displacing the array of apertures 802 along the x and y axis.

The array of apertures 802, the information carrier 801 and the detector 803 are stacked in parallel planes. The only moving part is the array of apertures 802.

It is noted that the three-dimensional view of the system as depicted in Fig.1 would be the same as the one depicted in Fig.8 in replacing the array of apertures 802 by the array of micro-lenses 102.

The scanning of the information carrier by the array of light spots is done in a plane parallel to the information carrier. A scanning device provides translational movement in the two directions x and y for scanning all the surface of the information carrier.

In a first solution depicted in Fig.3, the scanning device corresponds to an H-bridge. The optical element generating the array of light spots (i.e. the array of micro-lenses or the array of apertures) is implemented in a first sledge 301 which is movable along the y axis compared to a second sledge 302. To this end, the first sledge 301 comprises joints 303-304-305-306 in contact with guides 307-308. The second sledge 302 is movable along the x axis by means of joints 311-312-313-314 in contact with guides 309-310. The sledges 301 and 302 are translated by means of actuators (not represented), such as by step-by-step motors, magnetic or piezoelectric actuators acting as jacks.

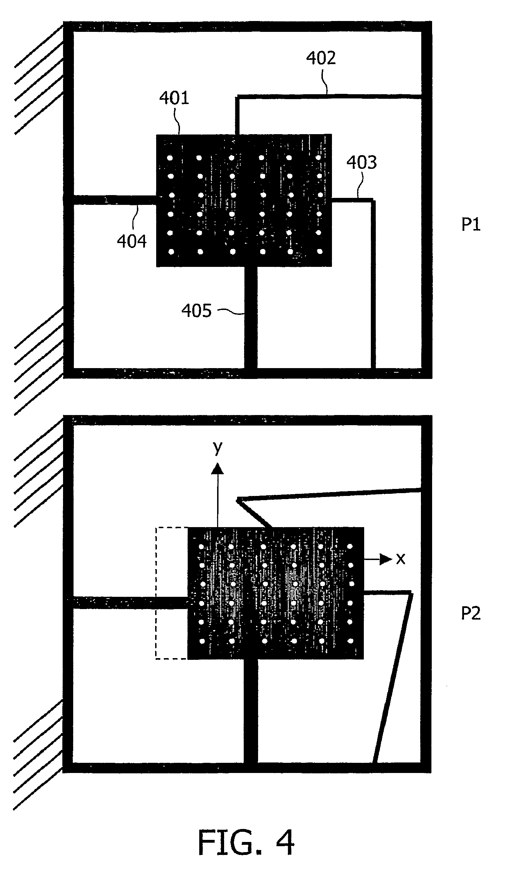

In a second solution depicted in Fig.4, the scanning device is maintained in a frame 401. The elements used for suspending the frame 401 are depicted in a detailed three-dimensional view in Fig.5. These elements comprise :

- a first leaf spring 402,
- a second leaf spring 403,
- a first piezoelectric element 404 providing the actuation of the scanning device 401 along the x axis,

a second piezoelectric element 405 providing the actuation of the scanning device 401 along the y axis. The second solution depicted in Fig.4 has less mechanical transmissions than the H-bridge solution depicted in Fig.3. The piezoelectric elements, in contact with the frame 401, are electrically controlled (not represented) so that a voltage variation results in a dimension change of the piezoelectric elements, leading to a displacement of the frame 401 along the x and/or the y axis.

The position P1 depicts the scanning device 401 in a first position, while the position P2 depicts the scanning device 401 in a second position after translation along the x axis. The flexibility of the leaf springs 402 and 403 is put in evidence.

A similar configuration can be built with four piezoelectric elements, the two extra piezoelectric elements replacing the leaf springs 402 and 403. In that case, opposite pair of piezoelectric elements act together in one dimension in the same way as an antagonist pair of muscles.

Fig.9 depicts an improved system in which the scanning of the information carrier 901 is realized without moving components. Fig.9 is based on Fig.2 but comprises additionally a phase-modulator 906 placed in the path of the input light beam 904.

The non-mechanical scanning is realized by applying a phase profile defined by the phase-modulator 906 to the input light beam 904, and in varying the phase profile. The phase-modulator 906 varies the phase of the input light beam 904 with respect to the lateral distance x (and/or y).

It is noted that the phase-modulator 906 can also be placed between the array of apertures 902 and the information carrier 901 (not represented).

When the phase-modulator 906 acts so as the phase $\phi(x)$ varies in a linear way with respect to the position x, this leads to a lateral shift $\Delta x$ of the array of light spots 903 along the lateral axis x. It can be defined that the phase $\phi(x)$ and the lateral position x are linked by the following relation :

$$\phi(x) = \frac{2\pi}{a} \cdot \frac{x}{\lambda} \qquad \qquad \text{Eq.1}$$

where

x is the lateral position (taken for example from the extreme left side of the phase-modulator 906),
$\lambda$ is the wavelength of the input light beam 904,
a is a variable parameter.

It can be shown that if a phase profile as defined by Eq.1 is performed by the phase-modulator 906, the lateral shift $\Delta x$ of the array of light spots 903 is given by the following relation:

$$\Delta x = a.Z \qquad \qquad \text{Eq.2}$$

where Z is fixed value corresponding advantageously to the Talbot distance z0, or to an integer multiple or a sub-multiple of the Talbot distance z0,

The parameter a allows modifying the linearity factor of the phase profile in view of changing the lateral shift $\Delta x$. For each value of the parameter a, a different phase profile is defined. A variation of the parameter a results as a consequence in a shift spots in x.

For scanning all the surface of the information carrier 901, each macro-cell of the information carrier must be scanned by a light spot of the array of spots. The scanning of a macro-cell thus corresponds to a two-dimensional scanning along the x and y axis. This two-dimensional scanning is performed in defining simultaneously a linear phase modulation according to the x and y axis, the defined phase profile resulting from a linear combination of a linear phase profile according to the x (as defined by Eq.1) axis and a linear phase profile according to the y axis (similarly as defined by Eq.1 in substituting x by y).

The phase-modulator 906 comprises advantageously controllable liquid crystal (LC) cells. For example, pixelated linear nematic LC cells can be used such that each aperture of the array of apertures 902 has its own pixel, and can thus be given its own phase $\phi(x)$. Thus, the phase-modulator 906 corresponds to a two-dimensional array of LC pixels. Nematic liquid crystals are made of elongated molecules that are on average aligned along a preferential axis, the director. An LC phase modulator can be made by placing a layer of nematic liquid crystal between two electrically conducting substrates and applying a voltage to the LC-layer. The electric field will tilt the director in the direction of the applied field. The LC-layer is preferably non-twisted, meaning that, when traversing the cell from substrate to substrate, the director is oriented everywhere in a single plane. A beam of linearly polarized light with polarization direction in this plane experiences a refractive index that depends on the angle between the director and the normal to the substrates. As a consequence, the optical path length, and thus the phase change, varies as the applied voltage varies Since each of the apertures of the array of apertures 902 has its own pixel, the phase profile defines a ramp having incremental steps, the ramp globally fitting a linear equation defined by Eq.1.

Alternatively, the phase-modulator 906 may define a continuous preset phase profile which is electrically controllable for varying the linearity factor of the phase profile.

Alternatively, electro-wetting cells can be used for defining the phase profile. In this case, the phase profile according to the lateral position x is changed by applying different high voltages to the electro-wetting cell.

Alternatively, the array of light spots can be shifted on the information carrier in varying the incident angle of the input light beam 904 from the axial direction z. This solution is advantageous since it no more requires a phase-modulator placed in the light path. It requires however actuation means (not represented) for varying the angle of the light beam 904. When the angle of the light beam is *a* with respect to the surface normal of the aperture array, the phase profile corresponds to the one defmed by Eq.1.

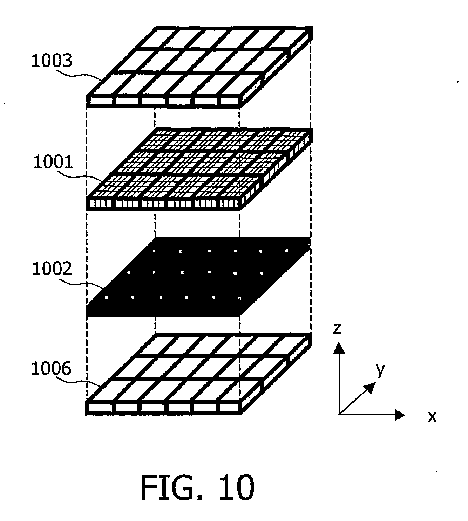

Fig.10 depicts a three-dimensional view of the system as depicted in Fig.9. It comprises an array of apertures 1002 for generating an array of light spots applied to the information carrier 1001. Each light spot is applied and scanned over a two-dimensional set of data of the information carrier 1001 (represented by squares in bold). In response to this light spot, the information carrier generates (or not, if the light spot is applied to a non-transparent area) an output light beam detected by the sensor element of the detector 1003 opposite the set of data which is scanned. The scanning of the information carrier 1002 along the x and y axis is performed by means of a phase-modulator 1006 placed below the array of apertures 1002, without moving any elements.

The phase-modulator 1006, the array of apertures 1002, the information carrier 1001 and the detector 1003 are stacked in parallel planes.

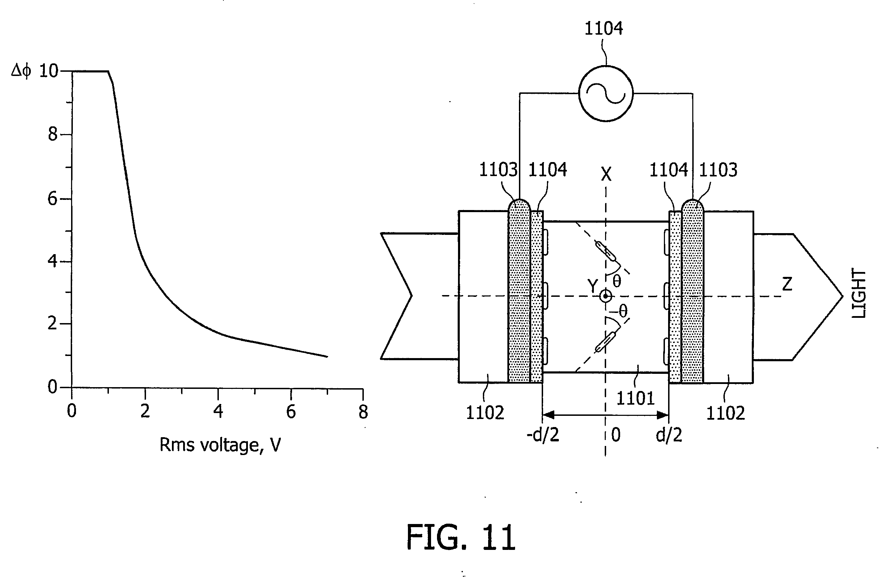

Fig.11 depicts an example of a LC cell. It comprises an LC layer 1101, a glass substrate 1102, transparent electrodes 1103, alignment layers 1104. In this figure, the parameter d corresponds to the cell thickness, while θ corresponds to the angle of the LC molecules. As the liquid crystal molecules reorient, due to the applied electric field by the voltage generator 1105, linearly polarised light propagating through the cell will experience a different effective refractive index, resulting in a phase change.

As an example, the resulting graph of a phase change $\Delta\phi$ versus voltage is also illustrated in Fig.11. The characteristics of the curve depend on the LC material which is used, the wavelength of the light and the cell thickness d.

When the phase-modulator 906 acts so as the phase $\phi(x)$ of the input light beam 904 varies in a quadratic way with respect to the position x, this leads to an axial shift $\Delta z$ of the array of light spots 903 along the axial axis z. It can be defmed that the phase $\phi(x)$ and the lateral position x are linked by the following relation :

$$\phi(x) = \frac{2\pi}{2R} \cdot \frac{x^2}{\lambda} \qquad\qquad\qquad Eq.3$$

where

    x is the lateral position,
    $\lambda$ is the wavelength of the input light beam 904,
    R is a variable parameter corresponding to the radius of curvature of the phase profile,
    $\Delta z$ is the axial shift with respect to the position for z=0.

It can be shown that if a phase profile as defined by Eq.3 is performed by the phase-modulator 906, the axial shift $\Delta z$ of the array of light spots 903 can be accurately approximated by the following relation :

$$\Delta z \approx \frac{Z^2}{R} \qquad\qquad\qquad\qquad \text{Eq.4}$$

where Z is a fixed value corresponding advantageously to the Talbot distance z0, or to an integer multiple or a sub-multiple of the Talbot distance z0.

The variable parameter R allows modifying the quadratic factor of the phase profile in view of changing the axial shift $\Delta z$. For each value of the parameter R, a different phase profile is defined. A variation of the parameter R results as a consequence in a shift $\Delta z$. The light spots 903 will thus focus closer to or further away from the surface of the information carrier 901. The quadratic phase profile plays the same role as a focus actuator in more traditional recording, but without using any mechanical elements.

Advantageously, the phase profile defined by the phase-modulator 906 may result from a linear combination of a linear phase profile as defined by Eq.1 (according to the x and/or y axis) and a quadratic phase profile as defined by Eq.4. This allows performing at the same time a two-dimensional scanning of the light spots, while setting accurately the focus of the light spots on the surface of the information carrier 901.

In an improved embodiment, the different components of the system, instead of being stacked as depicted in Figs.1-2-8-9-10, are placed next to each other for defining a planar system. This planar system is built on a waveguide comprising a first surface and a second surface. The use of the waveguide allows to laterally displace the different light beams due to reflection between the first surface (i.e. the lower surface) and the second surface (i.e. the upper surface) of the waveguide. The planar system is derived according two families.

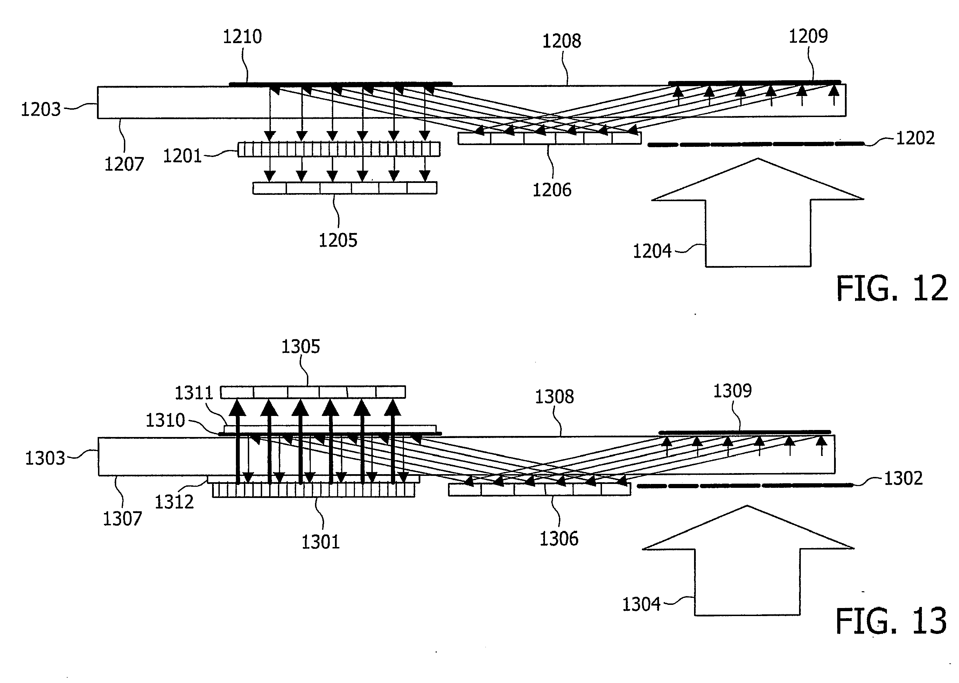

A first family of a planar system for reading data stored on an information carrier is depicted in Fig.12 and in Fig.13. This first family of a planar system comprises :

- a waveguide 1203-1303 comprising a first surface 1207-1307 and a second surface 1208-1308. The waveguide is made of plastic or glass, or any material having no birefringence or density variations.
- an array of apertures 1202-1302 placed on the side of said first surface for generating a first light beam from an input light beam 1204-1304. The light beam may derive from a laser beam which is expanded by means of an additional waveguide (not-represented).
- first reflection means 1209-1309 placed on the side of said second surface for generating a first reflected light beam from said first light beam,
- a reflective phase-modulator 1206-1306 placed on the side of said first surface for generating a phase-modulated light beam from said first reflected light beam. The phase-modulated light beam comprises an array of light spots as previously described.
- second reflection means 1210-1310 placed on the side of said second surface for generating a second reflected light beam from said phase-modulated light beam, said second reflected light beam being intended to scan the information carrier 1201-1301,
- a detector 1205-1305 for detecting said data from an output light beam generated by the information carrier 1201-1301. The detector, for example of the CMOS type as previously described, advantageously comprises an array of micro-lenses (not represented) for focusing said output light beam on the sensitive cells of the detector.

In the embodiment depicted in Fig.12, the detector 1205 is placed on the side of said first surface 1207, the information carrier 1201 being intended to be placed between said first surface 1207 and the detector 1205. This particular embodiment implies the use of an information carrier 1201 intended to be read in transmission.

In the embodiment depicted in Fig. 13, the detector 1305 is placed on the side of said second surface 1308. Moreover, the system further comprises :

- a reflective polarizer plate 1311 placed between said second reflection means 1310 and the detector 1305,
- a quarter-wavelength plate 1312 placed between said first surface 1307 and the information carrier 1301.

At the left hand side of the waveguide 1303, the thick arrows pointing upward indicates the light beam coming back from the information carrier 1301. The polarization of this light beam is rotated by means of the quarter-wavelength plate 1312 such that it is directly transmitted through the reflective polarizer plate 1311 (without being deviated by the second reflection means 1310).

This particular embodiment depicted in Fig.13 implies the use of an information carrier 1301 placed on the side of said first surface 1307 and intended to be read in reflection.

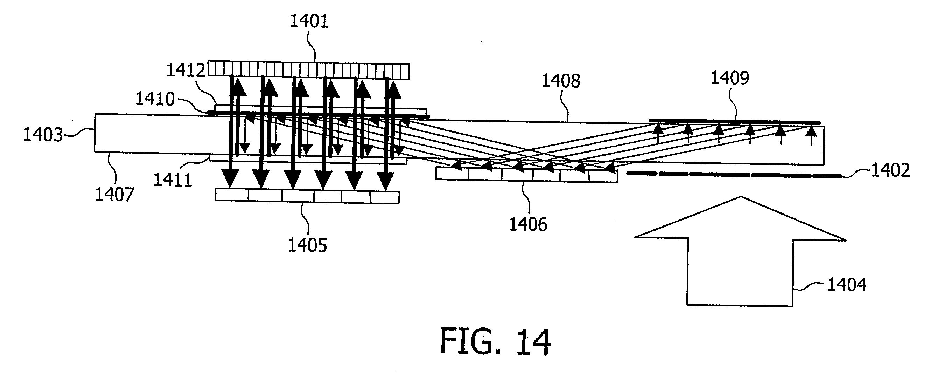

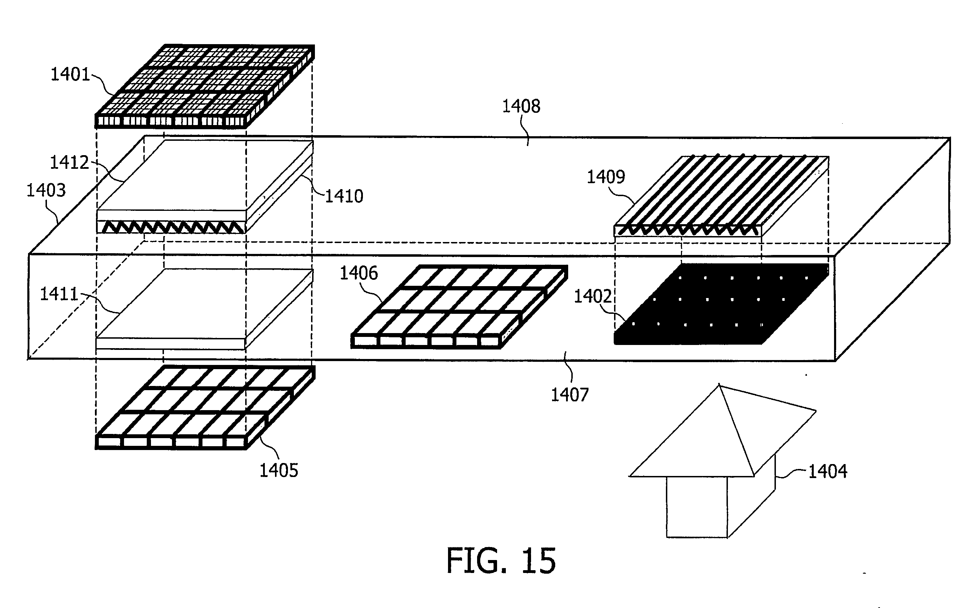

A second family of a planar system for reading data stored on an information carrier is depicted in Fig.14, and in Fig.15 in a three-dimensional view. This second family of a planar system comprises :

- a waveguide 1403 comprising a first surface 1407 and a second surface 1408. The waveguide is made of plastic or glass, or any material having no birefringence or density variations.
- an array of apertures 1402 placed on the side of said first surface for generating a first light beam from an input light beam 1404. The light beam may derive from a laser beam which is expanded by means of an additional waveguide (not-represented).
- first reflection means 1409 placed on the side of said second surface for generating a first reflected light beam from said first light beam,
- a reflective phase-modulator 1406 placed on the side of said first surface for generating a phase-modulated light beam from said first reflected light beam. The phase-modulated light beam comprises an array of light spots as previously described.
- second reflection means 1410 placed on the side of said second surface 1408 for generating a second reflected light beam (indicated by the thin arrows pointing downward) from said phase-modulated light beam. The second reflected light beam is perpendicular to the plane of the information carrier 1401.
- a reflective polarizer plate 1411 placed on the side of said first surface for generating a third reflected light beam (indicated by the thick arrows pointing upward) from said second reflected light beam, said third reflected light beam being intended to pass through a quarter-wavelength plate 1412 placed between said second reflection means 1410 and the information carrier, and being intended to scan the information carrier 1401. The reflective polarizer plate 1411 is such that it reflects a light beam (corresponding to said second reflected light beam) having a given polarization, and it transmits a light beam (corresponding to said third reflected light beam) having a polarization rotated by 90 degrees compared to said given polarization.
- a detector 1405 placed below the reflective polarizer plate 1411 for detecting said data from an output light beam (indicated by the thick arrows pointing downward) generated by the information carrier 1401. The output light beam is transmitted through the quarter-wavelength plate 1412 and through the reflective polarizer plate 1411. The detector, for example of the CMOS type as previously described, advantageously comprises an array of micro-lenses (not represented) for focusing said output light beam on the sensitive cells of the detector.

This particular embodiment depicted in Fig.14 and Fig.15 implies the use of an information carrier 1401 intended to be placed on the side of said second surface 1408, and intended to be read in reflection. This embodiment of the planar system is advantageous since all components are on the same side of the waveguide, while the information carrier in on the opposite side. This arrangement facilitates the implementation in an information carrier reading apparatus. Preferably, the distance between the first surface 1207-1307-1407 and the second surface 1208-1308-1408 is such that the light beam generated at the output of said array of apertures 1202-1302-1402 is re-imaged on the reflective phase-modulator 1206-1306-1406.

All embodiments of the planar systems have in common that they use the phase-modulator in reflection. Since the light beam passes the reflective phase-modulator layer twice it allows doubling the phase shift that is applied to the light beam (defined by equations 1-4). Similarly as the embodiment depicted in Fig.9, each pixel of the reflective phase-modulator 1206-1306-1406 can be addressed electrically. Liquid crystal on silicon (LCOS) technology can advantageously be used in that case.

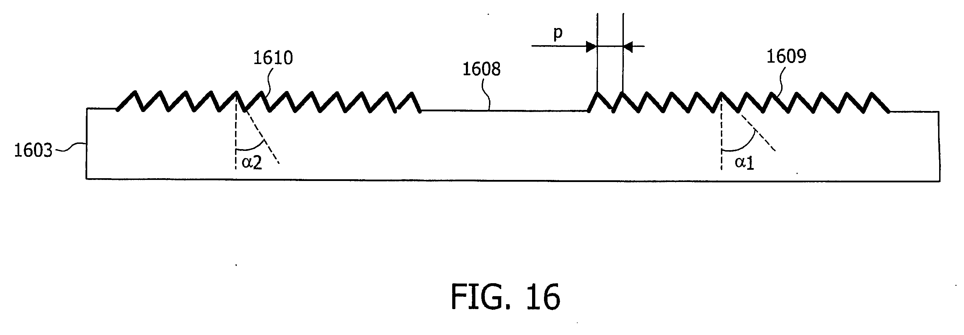

Fig.16 depicts a detailed view of the first reflection means 1609 and second reflection means 1610.

The reflection angle of the first reflected light beam may be determined by the angle $\alpha 1$ of a triangular structure, and the reflection angle of the second reflected light beam may be determined by the angle $\alpha 2$ of a triangular structure, said triangular structures being placed on the side of the second surface 1608 of the waveguide 1603.

The reflection angles may also be determined in choosing the pitch p of the structures on the order of the wavelength $\lambda$ of the input light beam so as to define a blazed grating, the first order diffracted beams being used as output deviated light beams.

The system can advantageously be implemented in a reading apparatus for reading data stored on an information carrier.

A method and apparatus for generating an array of high-quality optical probes that can be applied to the above system will now be described. The technique overcomes the limits posed by fundamental optical aberrations in the Talbot effect, and allows higher data densities to be achieved. The method consists of pre-compensating aberrations in the aperture array that is used to generate the probes. In fact the aperture array can be replaced by a phase mask (also termed an aberration optical element). The phase mask can have discrete phase steps.

A numerical simulation has demonstrated the generation of high quality probes, and shown that this can be achieved by a relatively simple, phase only mask.

Firstly, there is shown the limits posed by aberrations in the Talbot effect. Consider a periodic object such as the mask 202 in Fig. 2, with periodicity $p$ and length $L$. The wave vector corresponding to the unit cell is denoted by $k_q$

= 2π/p. The electric field E(x, z=0) of the beam 204 in Fig. 2 just behind the periodic object 202 is given by

$$E(x, z = 0) = \sum_{n=-\infty}^{\infty} E_n e^{ink_q x} F\left(\frac{x}{L}\right) \qquad (1.1)$$

where $F(x)$ is 1 when $|x|<1/2$, and 0 otherwise ($F(x)$ determines the finite size of the object). The coefficients $E_n$ are the Fourier components of the transmission function $E_{cell}(x)$ of the unit cell of the periodic object.

$$E_n = \frac{1}{P} \int_{-p/2}^{p/2} E_{cell}(x) e^{-ink_q x} dx \qquad -(1.2)$$

The finite size of the object leads to smearing out of the Fourier components.

$$\hat{E}(k) = \int dx \sum_{n=-p/\lambda}^{p/\lambda} E_n e^{ink_q x} F\left(\frac{x}{L}\right)$$
$$= \sum_{n=-p/\lambda}^{p/\lambda} E_n \mathrm{sinc}((nk_q - k)L) \qquad (1.3)$$

Note that the summation is limited to propagating waves only, hence |n| must be smaller than p/λ.
The field at a distance z from the object is given by:

$$E(x, z) = \frac{1}{2\pi} \int dk \left[ e^{-ikx} e^{iz\sqrt{k_0^2 - k^2}} \sum_{n=-p/\lambda}^{p/\lambda} E_n \mathrm{sinc}((nk_q - k)L)) \right] \qquad (1.4)$$

When the object is infinite the sinc becomes a δ-function

$$E(x, z) = \sum_{n=-p/\lambda}^{p/\lambda} E_n e^{-ink_q x} e^{iz\sqrt{k_0^2 - (nk_q)^2}} \qquad (1.5)$$

As $E_n$ is the Fourier transform of the unit cell, and Eq. -(1.5) is a back-transformation, the function $z\sqrt{k_0^2 - (nk_q)^2}$ can be seen as a phase-aberration.

The phase aberration term can be expanded as:

$$z\sqrt{k_0^2 - (nk_q)^2} = \frac{2\pi}{\lambda} z \left(1 - \frac{k_q^2}{2k_0^2} n^2 - \frac{k_q^4}{8k_0^4} n^4 + \ldots \right) \qquad (1.6)$$

As only discrete $n$ values play a role $z$ can be chosen such that the second order term is cancelled:

$$\frac{k_q^2}{2\lambda k_0^2} = m$$

$$z_T = m\frac{2p^2}{\lambda}$$

$$(1.7)$$

where m is an integer.

In the paraxial approximation (where higher order terms in Eq.(1.6) are neglected) the unit cell is imaged perfectly at the Talbot distance $z_T$. When the paraxial approximation is not valid (in the case of unit cells with structure of the order of a wavelength) the higher order terms cause a distortion of the imaging process. In analogy with aberrations in traditionel imaging the fourth order term in Eq.(1.6) can be associated with spherical aberration.

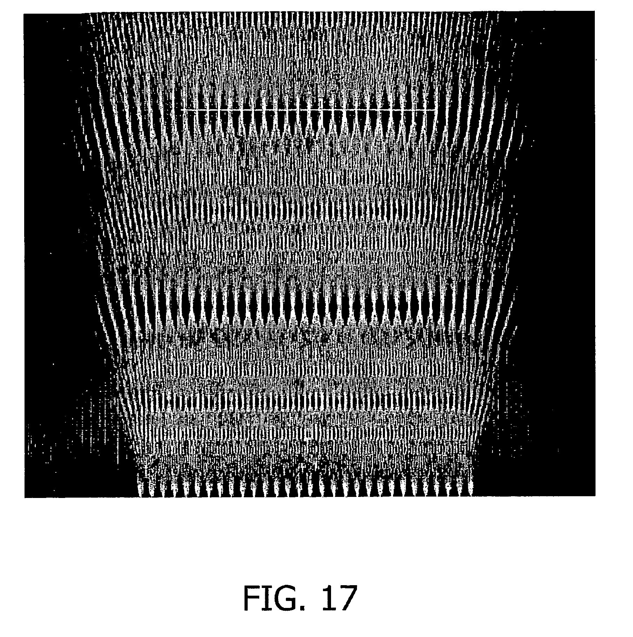

Figure 17 shows the intensity distribution behind a periodic pattern (an array of apertures) according to the prior art. The structure is at the bottom of the image, and consists of an array of small apertures (1 $\lambda$ diameter, 20$\lambda$ spacing). The Talbot distance (800$\lambda$) is indicated by the horizontal line. It can be seen that the intensity distribution at the structure is "imaged" at the Talbot distance. Two effects that influence the image quality can be observed: 1) the finite size of the array, which mainly affects spots at the edge of the image and 2) aberrations. The effect of the aberrations is most clearly seen as a vertical shift of the image, i.e. in the fact that the best foci lay slightly closer to the array than the Talbot distance. This can be observed by the fact that the sharpest "foci" lie slightly below the horizontal line. The aberrations also cause a degradation of the spot quality.

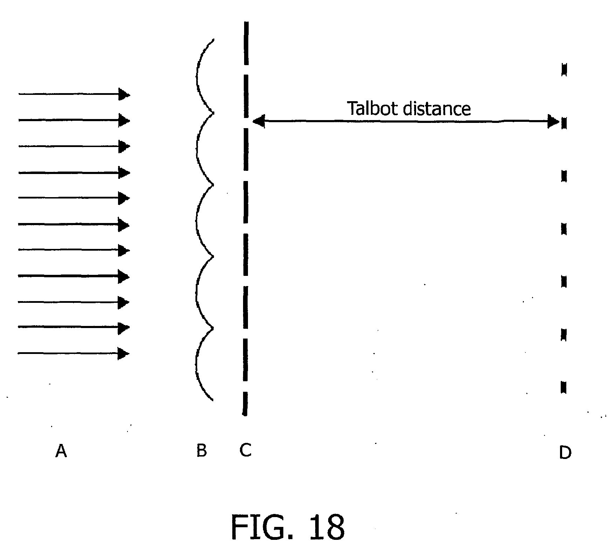

Figure 18 illustrates the use of an aperture array to generate an array of probes, according to the prior art. A) is the plane wave illumination. B) is a lens array to enhance transmission efficiency. C) is the aperture array and D) is the probe array. For a low data density system, where the optical probes can be relatively large, the aberrations are not expected to be a fundamental problem. However, in order to increase the data density, the effective numerical aperture needs to be increased as well, and the aberrations will pose a fundamental limit. Methods for correcting or preventing the aberrations are therefore necessary when a high-density system is required.

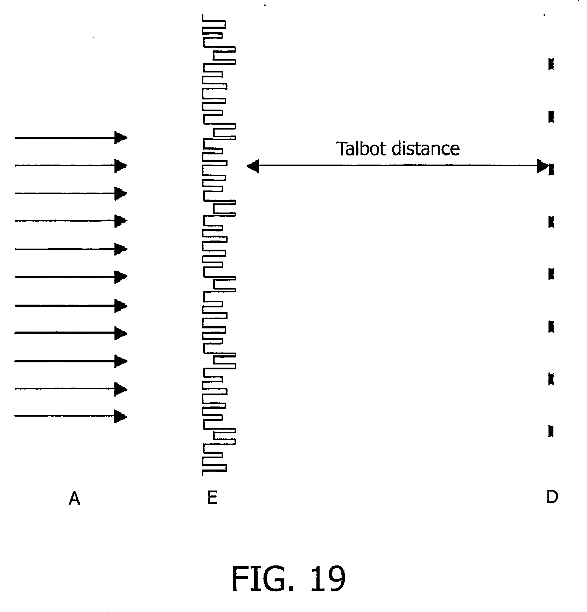

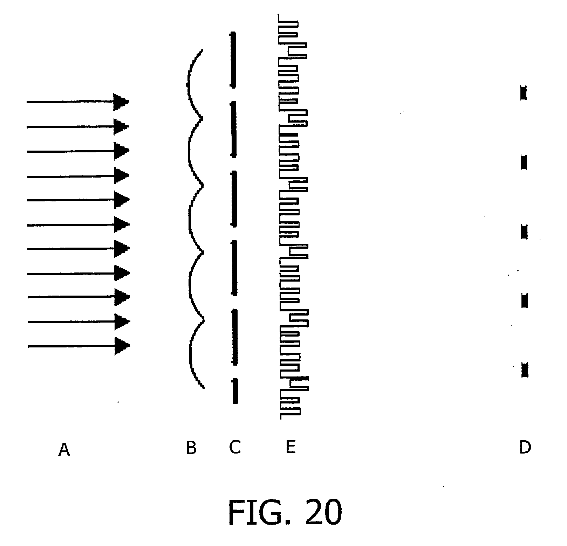

One embodiment of the invention consists of a method to correct the phase aberrations by designing the source array such that the phase factors that cause the aberrations are pre-compensated. This results in a mask that can be placed in a parallel light beam (see Figure 19). In an alternative embodiment the mask is designed such that it can be placed after the aperture array (Figure 20). In certain cases this can result in a simpler mask.

Figure 19 illustrates the use of a phase mask or aberration optical element (E) to both generate an array of probes and pre-compensate the aberrations. The phase mask can for instance be implemented as a height profile etched in a glass plate, or as a height profile replicated on a transparent substrate.

Figure 20 illustrates the use of a phase mask in combination with an aperture array. In this embodiment a phase mask is placed at a given distance from the apertures. The fact that a different correction function is required can make the mask design simpler.

In order to be able to easily produce the mask it is preferable to simplify its design. Below it is demonstrated that this is possible by 1) ignoring the amplitude modulation (use a phase-only mask), 2) using discrete phase steps only and/or 3) modifying the calculated mask to remove small features (e.g. features beneath a predetermined size limit, that would be difficult to manufacture).

### *Numerical simulation*

```
// F is the complex amplitude of the electric field
// kq is the wave vector corresponding to the periodicity
// k0 is the wavevector of the optical radiation
// corr is the phase added to the diffraction orders to correct for the aberration
// zc is the propagation distance for which the aben-ations are corrected
// ampl is the amplitude of the diffraction orders
for (n=0; n < (k0/kq); n=n+1)
{
kx=n*kq;
ampl=exp(-3*(n*kq/k0)**2);
corr=zc*(sqrt(k0**2-kx**2)-k0+(1/2)*kx**2/k0);
F=F + cos(n*kq*x)*exp(i*corr)*ampl;
}
```

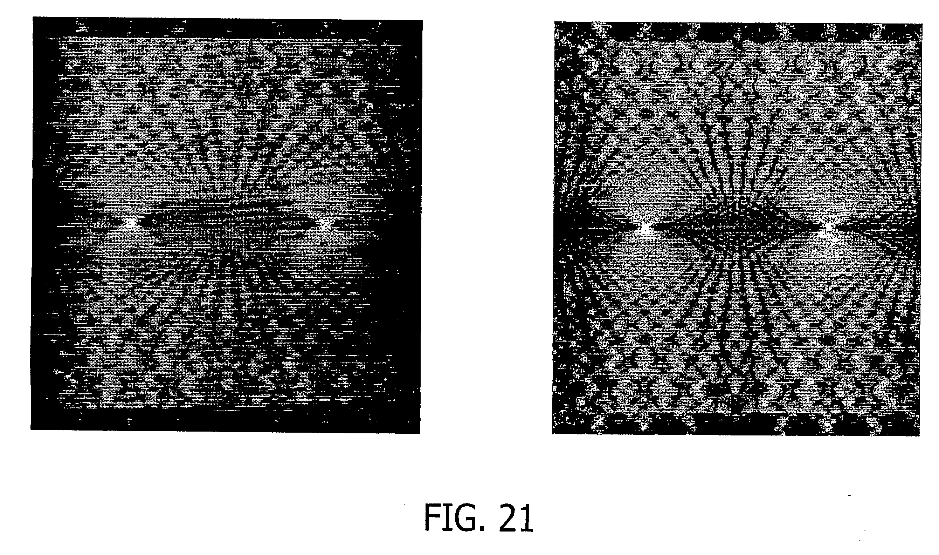

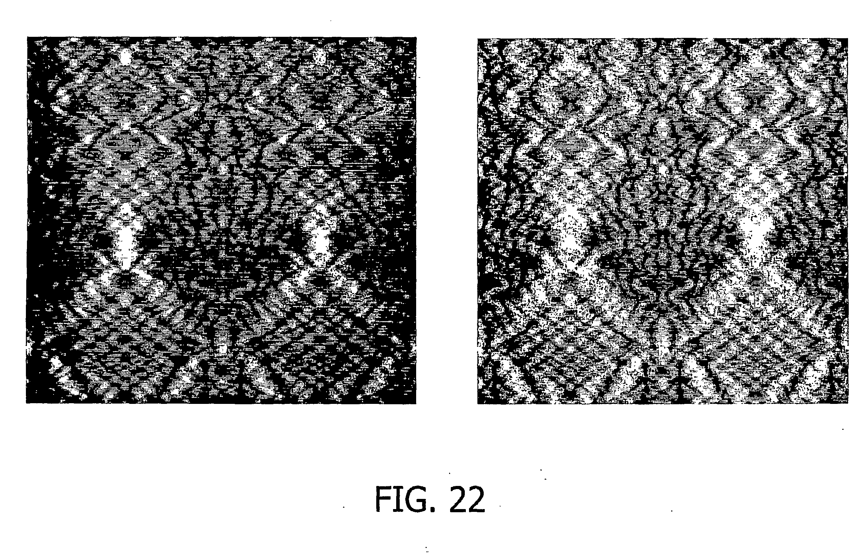

Pseudo code is shown above that can be used how to generate the masks. In the pseudo code, the term sqrt indicates a square root operation, exp x indicates the exponential function $e^x$, and x **y indicates $x^y$. The fact that only spatial frequencies that are a multiple of $k_q$ are used ensures that we have a periodic object. The amplitude (*ampl*) of the diffraction orders is chosen to decrease smoothly in this example (by using a Gaussian shape). This decrease determines the effective numerical aperture. The phase term (*corr*) determines the phase of the diffraction orders. When the phases are taken as equal (*corr=0*) there is an array of spots at the source (shown in Figure 21) and a heavily aberrated image at the Talbot distance (Figure 22).

Figure 21 illustrates the probes when no aberrations are present. The right hand side image has been Gamma-corrected to enhance the visbility of the low-intensity structure. The image dimension is 40 wavelengths in the horizontal direction and 200 wavelengths in the vertical direction. The periodicity of the array is 20 wavelengths. The probes are generated by the pseudo code discussed above.

Figure 22 illustrates the effect of the aberrations. This intensity pattern is obtained at the Talbot distance when the structures in Figure 21 are used as a source.

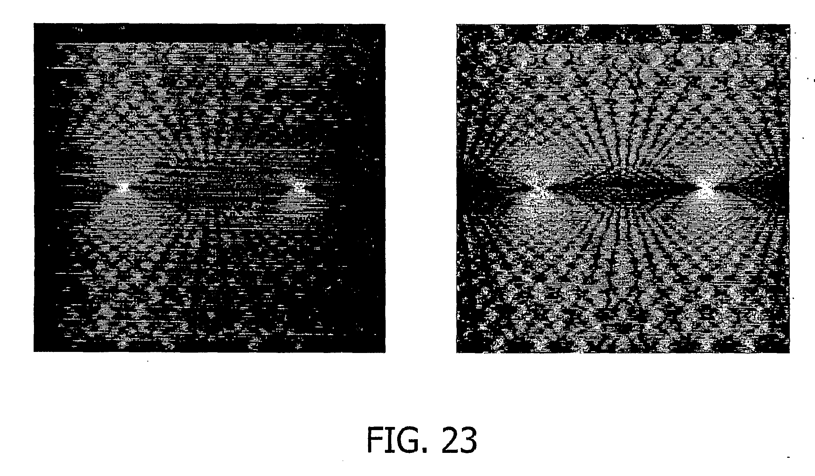

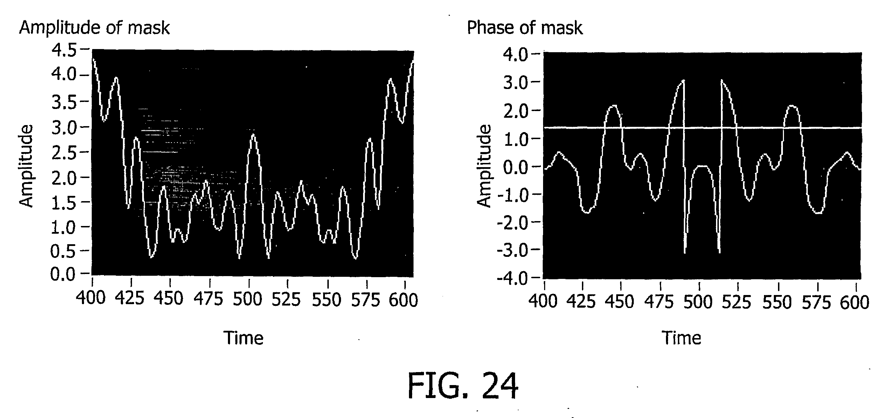

When the phases are chosen to correct for the aberrations (with zc the Talbot distance and *corr* as shown in the box above) an aberration free image is provided (Figure 23), but at the expense of a more complex source (Figure 24).

Figure 23 illustrates the image at the Talbot distance when the full correction mask (i.e. without simplification) is used. In the pseudo code (see above) the following expression is used for the phase term: *corr=zc\*(sqrt(k0\*\*2-kx\*\*2)-k0+(1/2)\*kx\*\*2/k0)*. Figure 24 illustrates the amplitude (left) and phase (right) profile of the mask (one unit cell) used to generate the spots of Figure 23.

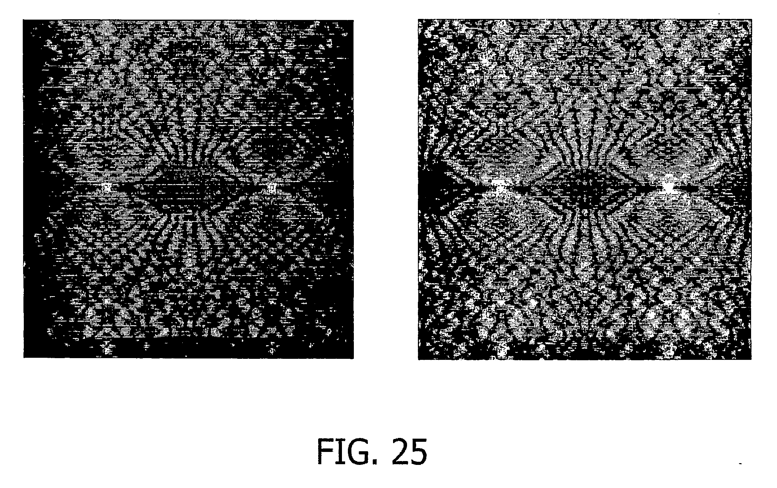

Next the source is simplified, to prove if it is possible to use a mask that can be more easily manufactured. This is done here by first setting the transmission amplitude to 1 (keeping only the phase profile, Figure 25).

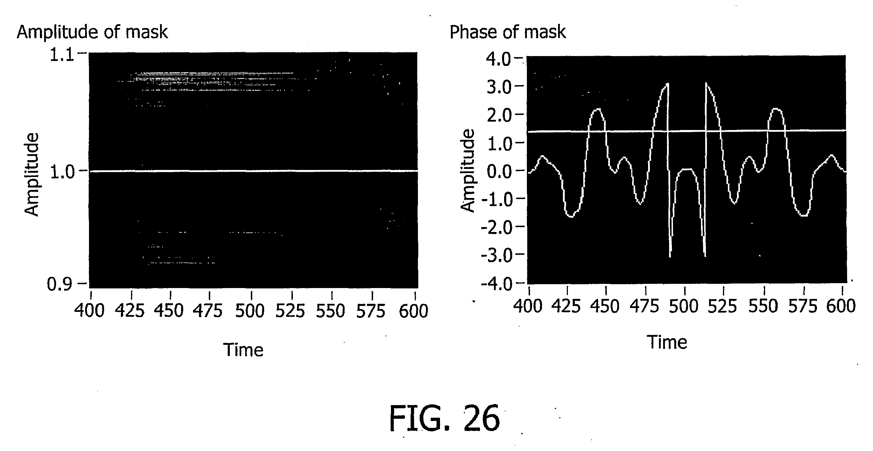

Figure 25 shows the image at the Talbot distance when the amplitude of the mask is set to 1, keeping only the phase term. It can be seen that the quality is still very good. Thus it is shown that the amplitude term can be neglected. Figure 26 shows the amplitude (left) and phase (right) profile of the mask (one unit cell) used to generate the spots of Figure 25.

> // fin is the phase of the continuous junction
> // fout is the discretised phase for the mask
> n=2;
>
> $fout=(pi/n)*int(fin/(pi/n));$

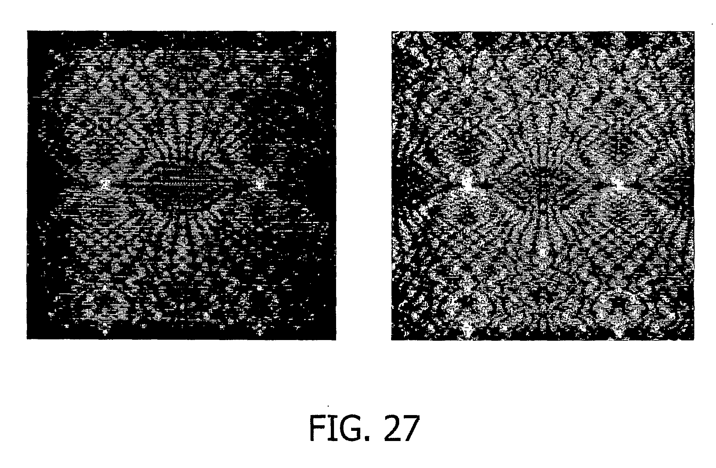

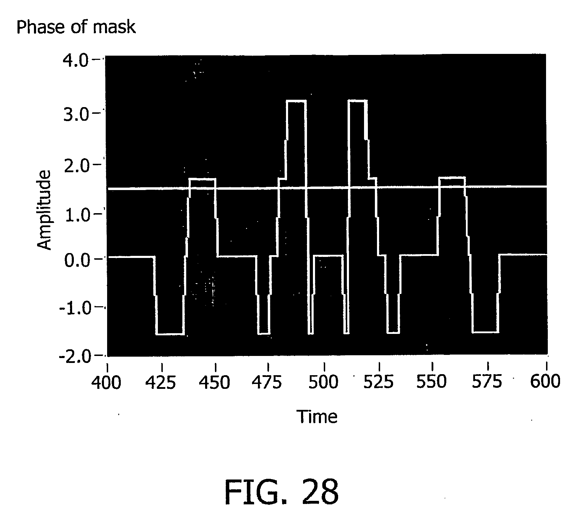

Next discrete phase steps in the mask were chosen, as indicated in the above pseudo code. (Figure 27 and Figure 28). The operation "int" indicates that the number is rounded down to the nearest integer. It can be seen that this hardly influences the image quality. The pseudo code used to discretize the phase masks is show in the box above. Only phase values that are a multiple of $\pi/n$ are be used (in total there are 2n steps in the hologram).

Figure 27 shows the image obtained at the Talbot distance when using a mask with 4 discrete phase steps (-½π,0,½π,π). In the pseudo code for discretisation $n = 2$. Figure 28 shows the mask used to generate the probes shown in Figure 27 (the mask amplitude is kept equal to 1).

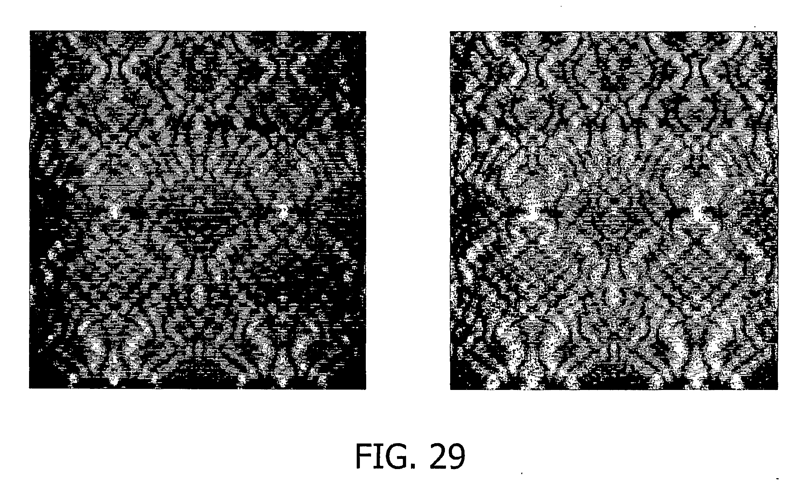

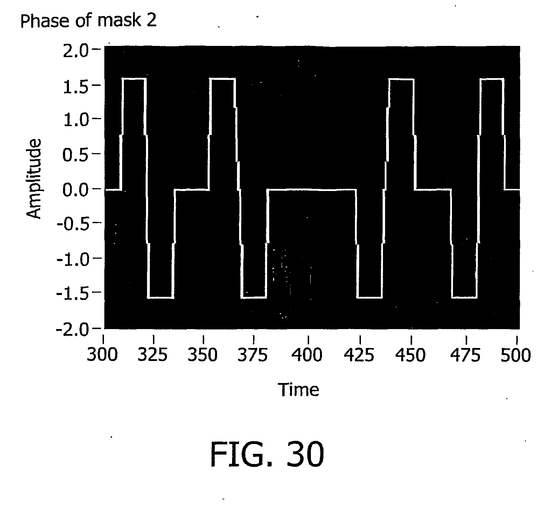

Finally it is possible to manually change the mask to optimize manufacturability. An example is shown in Figure 29 and Figure 30. Figure 29 shows the image obtained at the Talbot distance when the mask is manually modified, by removal of features beneath a predetermined threshold, to make it easier to produce (some of the smallest features from the mask in Figure 28 have been removed). Although no extensive optimization procedure has been followed the image quality is already good (i.e. compare with Figure 22). Figure 30 shows the mask used to generate the probes shown in Figure 29 (the amplitude is kept equal to 1). The mask has only three different phase levels, and structure on the order of a wavelength.

Although the above simulations relate to a one dimensional array, it will be appreciated that the conclusions are also valid for two-dimensional arrays and masks. Additionally, in the above desciption it is generally assumed that the array optical element is arranged to generate an array of radiation spots at substantially the Talbot distance from the array optical element. However, it will be appreciated that the array optical element can be arrange to generate spots at a different distance. The abberation optical element can be arranged to correct for optical aberration in radiation spots brought to a focus at any predetermined location. Equally, the aberration optical element may be arranged to alter the position of the spots. For instance, if the array optical element is arranged to generate an array of radiation spots at the paraxial Talbot distance, then the aberration optical element can be arranged to apply a predetermined optical aberration for correction of optical aberration in the radiation spots, as well as a predetermined optical function to alter the z position of the spots (i.e. the distance between the spots and the array optical element along the optical path).

In the above, the aberration optical element has generally been described as a discrete unit, separate from the array optical element. However, it will be appreciated that the two elements can be formed as a single, contiguous unit. Alternatively, the array optical element may form a part of the aberration optical element i.e. the aberration optical element is arranged not only to correct optical aberration in the radiation spots, but also to generate the array of radition spots.

## Claims

1. An optical scanning device for scanning an information carrier, the device comprising:

   an array optical element (B, C) arranged to generate from an incident radiation beam (A) by exploiting the Talbot effect a two-dimensional array of radiation spots (D) for the scanning of the information carrier, and
   an aberration optical element (E) arranged to apply a predetermined optical aberration to the radiation for correction of optical aberration in the radiation spots (D),

   **characterized in that** the optical aberration to be corrected is the fundamental optical aberration of the Talbot effect.

2. A device as claimed in claim 1, wherein the aberration optical element (E) is located on the optical path between the array optical element and the radiation spots.

3. A device as claimed in claim 1, wherein the aberration optical element (E) is located on the optical path between a source of the incident radiation beam and the array optical element.

4. A device as claimed in any one of the above claims, wherein the aberration optical element (E) is arranged to substantially alter only the phase of the radiation.

5. A device as claimed in any one of the above claims, wherein the aberration optical element (E) comprises a transparent material having substantially uniform refractive index, the thickness of the material varying across the element to provide the predetermined optical aberration.

6. A device as claimed in any one of the above claims, wherein the aberration optical element (E) is formed as a discrete device.

7. A device as claimed in any one of claims 1 to 5, wherein the aberration optical element (E) comprises said array optical element (C).

8. A device as claimed in any one of the above claims, wherein the array optical element is an array of lenses (B) or an array of apertures (C).

9. A device as claimed in any one of the above claims, wherein the array optical element (C) is arranged to generate the spots at substantially the Talbot distance from the array optical element (C).

10. A device as claimed in claim 9, wherein the aberration optical element (E) is arranged to apply the predetermined optical aberration for correction of optical aberration in the radiation spots (D) due to the finite size of the array optical element.

11. A device as claimed in any one of the above claims, further comprising a detector comprising an array of optical sensors arranged to detect information from an array of output light beams generated by said information carrier.

12. An aberration optical element for use in an optical scanning device for scanning an information carrier, the device comprising an array optical element (B, C) arranged to generate from an incident radiation beam (A) by exploiting the Talbot effect a two-dimensional array of radiation spots (D) (A) for the scanning of the information carrier; wherein the aberration optical element (E) is arranged to apply a predetermined optical aberration to the radiation for correction of optical aberration in the radiation spots, **characterized in that** the optical aberration to be corrected is the fundamental optical aberration of the Talbot effect.

13. A method of scanning an information carrier, the method comprising:

generating from an incident radiation beam (A) by exploiting the Talbot effect a two-dimensional array of radiation spots (D) for the scanning of the information carrier; and

applying a predetermined optical aberration to the radiation for correction of optical aberration in the radiation spots,

**characterized in that** the optical aberration to be corrected is the fundamental optical aberration of the Talbot effect.

14. A method of manufacturing an optical scanning device for scanning an information carrier, the method comprising:

providing an array optical element (B, C) arranged to generate from an incident radiation beam (A) by exploiting the Talbot effect a two-dimensional array of radiation spots (D) for the scanning of the information carrier; and providing an aberration optical element (E) arranged to apply a predetermined optical aberration to the radiation for correction of optical aberration in the radiation spots (D)

**characterized in that** the optical aberration to be corrected is the fundamental optical aberration of the Talbot effect.

## Patentansprüche

1. Optische Abtastvorrichtung zum Abtasten eines Informationsträgers, wobei die Vorrichtung Folgendes umfasst:

ein optisches Arrayelement (B, C), das vorgesehen ist, um aus einem einfallenden Strahlenbündel (A) durch Nutzung des Talbot-Effekts ein zweidimensionales Array von Strahlungsflecken (D) zum Abtasten des Informationsträgers zu erzeugen, und ein optisches Aberrationselement (E), das vorgesehen ist, um eine vorgegebene optische Aberration auf die Strahlung anzuwenden, um die optische Aberration in den Strahlungsflecken (D) zu korrigieren,

**dadurch gekennzeichnet, dass** die zu korrigierende optische Aberration die grundlegende optische Aberration des Talbot-Effekts ist.

2. Vorrichtung nach Anspruch 1, wobei sich das optische Aberrationselement (E) auf dem optischen Pfad zwischen dem optischen Arrayelement und den Strahlungsflecken befindet.

3. Vorrichtung nach Anspruch 1, wobei sich das optische Aberrationselement (E) auf dem optischen Pfad zwischen einer Quelle des einfallenden Strahlenbündels und dem optischen Arrayelement befindet.

4. Vorrichtung nach einem der vorhergehenden Ansprüche, wobei das optische Aberrationselement (E) vorgesehen ist, um nur die Phase der Strahlung erheblich zu verändern.

5. Vorrichtung nach einem der vorhergehenden Ansprüche, wobei das optische Aberrationselement (E) ein transparentes Material umfasst, das einen im Wesentlichen gleichmäßigen Brechungsindex hat, wobei die Dicke des Materials über das Element variiert, um für die vorgegebene optische Aberration zu sorgen.

6. Vorrichtung nach einem der vorhergehenden Ansprüche, wobei das optische Aberrationselement (E) als eine diskrete Vorrichtung ausgeformt ist.

7. Vorrichtung nach einem der Ansprüche 1 bis 5, wobei das optische Aberrationselement (E) das genannte optische Arrayelement (C) umfasst.

8. Vorrichtung nach einem der obigen Ansprüche, wobei das optische Arrayelement ein Array aus Linsen (B) oder ein Array aus Aperturen (C) ist.

9. Vorrichtung nach einem der vorhergehenden Ansprüche, wobei das optische Arrayelement (C) vorgesehen ist, um die Flecken bei im Wesentlichem dem Talbot-Abstand von dem optischen Arrayelement (C) zu erzeugen.

10. Vorrichtung nach Anspruch 9, wobei das optische Aberrationselement (E) vorgesehen ist, um die vorgegebene optische Aberration zur Korrektur der optischen Aberration in den Strahlungsflecken (D) aufgrund der finiten Größe des optischen Arrayelements anzuwenden.

**11.** Vorrichtung nach einem der vorhergehenden Ansprüche, weiterhin mit einem Detektor, der ein Array aus optischen Sensoren umfasst und vorgesehen ist, um Informationen von einem Array aus Ausgangslichtbündeln zu detektieren, die von dem genannten Informationsträger erzeugt werden.

**12.** Optisches Aberrationselement zur Verwendung in einer optischen Abtastvorrichtung zum Abtasten eines Informationsträgers, wobei die Vorrichtung ein optisches Arrayelement (B, C) umfasst, das vorgesehen ist, um aus einem einfallenden Strahlenbündel (A) durch Nutzung des Talbot-Effekts ein zweidimensionales Array von Strahlungsflekken (D) (A) zum Abtasten des Informationsträgers zu erzeugen;
wobei das optisches Aberrationselement (E) vorgesehen ist, um eine vorgegebene optische Aberration auf die Strahlung anzuwenden, um die optische Aberration in den Strahlungsflecken zu korrigieren,
**dadurch gekennzeichnet, dass** die zu korrigierende optische Aberration die grundlegende optische Aberration des Talbot-Effekts ist.

**13.** Verfahren zum Abtasten eines Informationsträgers, wobei das Verfahren Folgendes umfasst:

Erzeugen eines zweidimensionalen Arrays von Strahlungsflecken (D) aus einem einfallenden Strahlenbündel (A) durch Nutzung des Talbot-Effekts, um den Informationsträger abzutasten; und
Anwenden einer vorgegebenen optischen Aberration auf die Strahlung, um die optische Aberration in den Strahlungsflecken zu korrigieren,

**dadurch gekennzeichnet, dass** die zu korrigierende optische Aberration die grundlegende optische Aberration des Talbot-Effekts ist.

**14.** Verfahren zum Herstellen einer optischen Abtastvorrichtung zum Abtasten eines Informationsträgers, wobei das Verfahren Folgendes umfasst:

Schaffen eines optischen Arrayelements (B, C), das vorgesehen ist, um aus einem einfallenden Strahlenbündel (A) durch Nutzung des Talbot-Effekts ein zweidimensionales Array von Strahlungsflecken (D) zum Abtasten des Informationsträgers zu erzeugen; und
Schaffen eines optischen Aberrationselements (E), das vorgesehen ist, um eine vorgegebene optische Aberration auf die Strahlung anzuwenden, um die optische Aberration in den Strahlungsflecken (D) zu korrigieren,

**dadurch gekennzeichnet, dass** die zu korrigierende optische Aberration die grundlegende optische Aberration des Talbot-Effekts ist.

**Revendications**

**1.** Dispositif optique de balayage pour balayer un support d'informations, le dispositif comprenant :

un élément optique matriciel (B, C) qui est agencé de manière à générer à partir d'un faisceau de rayonnement incident (A), par l'exploitation de l'effet de Talbot, une matrice bidimensionnelle de spots de rayonnement (D) pour le balayage du support d'informations, et
un élément optique d'aberration (E) qui est agencé de manière à appliquer une aberration optique prédéterminée au rayonnement pour la correction de l'aberration optique dans les spots de rayonnement (D),

**caractérisé en ce que** l'aberration optique à corriger est l'aberration optique fondamentale de l'effet de Talbot.

**2.** Dispositif selon la revendication 1, dans lequel l'élément optique d'aberration (E) se situe sur le trajet optique entre l'élément optique matriciel et les spots de rayonnement.

**3.** Dispositif selon la revendication 1, dans lequel l'élément optique d'aberration (E) se situe sur le trajet optique entre une source du faisceau de rayonnement incident et l'élément optique matriciel.

**4.** Dispositif selon l'une quelconque des revendications précédentes 1 à 3, dans lequel l'élément optique d'aberration (E) est agencé de manière à ne modifier sensiblement que la phase du rayonnement.

**5.** Dispositif selon l'une quelconque des revendications précédentes 1 à 4, dans lequel l'élément optique d'aberration (E) comprend un matériau transparent ayant un indice de réfraction sensiblement uniforme, l'épaisseur du matériau variant à travers l'élément pour fournir l'aberration optique prédéterminée.

6. Dispositif selon l'une quelconque des revendications précédentes 1 à 5, dans lequel l'élément optique d'aberration (E) est formé en tant qu'un dispositif discret.

7. Dispositif selon l'une quelconque des revendications précédentes 1 à 5, dans lequel l'élément optique d'aberration (E) comprend ledit élément optique matriciel (C).

8. Dispositif selon l'une quelconque des revendications précédentes 1 à 7, dans lequel l'élément optique matriciel est une matrice de lentilles (B) ou une matrice d'ouvertures (C).

9. Dispositif selon l'une quelconque des revendications précédentes 1 à 8, dans lequel l'élément optique matriciel (C) est agencé de manière à générer les spots à sensiblement la distance de Talbot à partir de l'élément optique matriciel (C).

10. Dispositif selon la revendication 9, dans lequel l'élément optique d'aberration (E) est agencé de manière à appliquer l'aberration optique prédéterminée pour la correction de l'aberration optique dans les spots de rayonnement (D) du fait de la taille finie de l'élément optique matriciel.

11. Dispositif selon l'une quelconque des revendications précédentes 1 à 10, comprenant encore un détecteur comprenant une matrice de capteurs optiques qui sont agencés de manière à détecter de l'information à partir d'une matrice de faisceaux de lumière de sortie qui sont générés par ledit support d'informations.

12. Elément optique d'aberration pour être utilisé dans un dispositif optique de balayage pour balayer un support d'informations, le dispositif comprenant un élément optique matriciel (B, C) qui est agencé de manière à générer à partir d'un faisceau de rayonnement incident (A), par l'exploitation de l'effet de Talbot, une matrice bidimensionnelle de spots de rayonnement (D) (A) pour le balayage du support d'informations, et
dans lequel un élément optique d'aberration (E) est agencé de manière à appliquer une aberration optique prédéterminée au rayonnement pour la correction de l'aberration optique dans les spots de rayonnement,
**caractérisé en ce que** l'aberration optique à corriger est l'aberration optique fondamentale de l'effet de Talbot.

13. Procédé de balayage d'un support d'informations, le procédé comprenant les étapes suivantes consistant à :

générer à partir d'un faisceau de rayonnement incident (A), par l'exploitation de l'effet de Talbot, une matrice bidimensionnelle de spots de rayonnement (D) pour le balayage du support d'informations ; et
appliquer une aberration optique prédéterminée au rayonnement pour la correction de l'aberration optique dans les spots de rayonnement,

**caractérisé en ce que** l'aberration optique à corriger est l'aberration optique fondamentale de l'effet de Talbot.

14. Procédé de fabrication d'un dispositif optique de balayage pour balayer un support d'informations, le procédé comprenant les étapes suivantes consistant à :

fournir un élément optique matriciel (B, C) qui est agencé de manière à générer à partir d'un faisceau de rayonnement incident (A), par l'exploitation de l'effet de Talbot, une matrice bidimensionnelle de spots de rayonnement (D) pour le balayage du support d'informations ; et
fournir un élément optique d'aberration (E) qui est agencé de manière à appliquer une aberration optique prédéterminée au rayonnement pour la correction de l'aberration optique dans les spots de rayonnement (D),

**caractérisé en ce que** l'aberration optique à corriger est l'aberration optique fondamentale de l'effet de Talbot.

FIG. 1

FIG. 2

FIG. 3

FIG. 4

FIG. 5

FIG. 6

705

701

703

FIG. 7A

FIG. 7B

FIG. 7C

FIG. 7D

803

801

802

y

x

## FIG. 8

905

903

901

z(n)

902

d

z

x

906

904

## FIG. 9

1003

1001

1002

1006

z

y

x

FIG. 10

FIG. 11

FIG. 12

FIG. 13

EP 1 807 832 B1

FIG. 14

FIG. 15

FIG. 16

EP 1 807 832 B1

FIG. 17

Talbot distance

A          B  C                                      D

# FIG. 18

Talbot distance

A                    E                                              D

# FIG. 19

A     B   C   E                                    D

# FIG. 20

FIG. 21

FIG. 22

FIG. 23

FIG. 24

EP 1 807 832 B1

FIG. 25

FIG. 26

FIG. 27

Phase of mask

FIG. 28

FIG. 29

Phase of mask 2

FIG. 30

**EP 1 807 832 B1**

**Patent documents cited in the description**

- US 20030086141 A1
- US 3676864 A
- US 6341136 B1